## Europäisches Patentamt
## European Patent Office
## Office européen des brevets

(11) Veröffentlichungsnummer: **0 078 923**
**B1**

(12) **EUROPÄISCHE PATENTSCHRIFT**

(45) Veröffentlichungstag der Patentschrift:
**29.01.86**

(51) Int. Cl.⁴: **H 02 M 7/757,** H 02 M 5/45

(21) Anmeldenummer: **82109293.9**

(22) Anmeldetag: **07.10.82**

(54) **Verfahren zum Betrieb eines Zwischenkreisumrichters und Schaltungsanordnung zur Durchführung des Verfahrens.**

(30) Priorität: **20.10.81 DE 3141621**

(43) Veröffentlichungstag der Anmeldung:
**18.05.83 Patentblatt 83/20**

(45) Bekanntmachung des Hinweises auf die Patenterteilung:
**29.01.86 Patentblatt 86/5**

(84) Benannte Vertragsstaaten:
**AT BE CH DE FR GB IT LI NL SE**

(56) Entgegenhaltungen:
**CH - A - 477 118**
**DE - A - 1 538 153**
**GB - A - 1 098 960**

**SIEMENS-ZEITSCHRIFT, Band 50, Nr. 1, 1976, Erlangen, H. KLAUTSCHEK "Asynchronmaschinenantriebe mit Strom-Zwischenkreisumrichtern" Seiten 23-28**

(73) Patentinhaber: **Siemens Aktiengesellschaft, Berlin und München Wittelsbacherplatz 2, D-8000 München 2 (DE)**

(72) Erfinder: **Schneider, Hans-Peter, Schulstrasse 18, D-8522 Herzogenaurach (DE)**
Erfinder: **Zander, Hans-Hermann, Dipl.-Ing., Würzburger Ring 86, D-8520 Erlangen (DE)**

## Beschreibung

Die Erfindung betrifft ein Verfahren zum Betrieb eines Zwischenkreisumrichters mit eingeprägter Zwischenkreis-Gleichspannung für zwei Energierichtungen mit zwei antiparallel geschalteten, gesteuerten Stromrichtern, denen über einen Zwischenkreis ein Wechselrichter in Drehstrom-Brückenschaltung nachgeschaltet ist und eine Schaltungsanordnung zur Durchführung des Verfahrens.

Ein derartiger Zwischenkreisumrichter mit einem Gleichspannungs-Zwischenkreis ist aus dem Buch «Thyristoren», von Heumann, Stumpe, 3. Auflage 1974, Seite 198 bekannt (vgl. auch DE-A-1 538 153).

Häufig ist es erwünscht, einen Umrichter in beiden Energierichtungen zu betreiben, d.h. eine Last sowohl von einer Versorgungsspannungsquelle zu speisen als auch die Last generatorisch auf die Versorgungsspannungsquelle zurückspeisen zu lassen. Damit können beispielsweise Motoren durch Rückspeisungen in eine Versorgungsspannungsquelle nahezu verlustlos abgebremst werden. Eine derartige Rückspeisung wurde bisher nur bei Umrichtern mit Gleichstrom-Zwischenkreis vorgesehen. Dabei bleibt die Stromrichtung im Zwischenkreis erhalten und es wird lediglich die Spannung im Zwischenkreis umgekehrt. Dies ist, wie auf Seite 348 des «Thyristor-Handbuchs» von Hoffmann/Stocker, 4. Auflage, 1976 dargestellt, einfach durch eine Verschiebung des Steuerwinkels des Wechselrichters möglich. Der Wechselrichter arbeitet dann im Gleichrichter-Betrieb, wobei ein kontinuierlicher Übergang zwischen Einspeisung und Rückspeisung erfolgt. Bei Zwischenkreis-Umrichtern mit Gleichspannungs-Zwischenkreis, also mit einer eingeprägten Spannung im Zwischenkreis, kann nicht die Zwischenkreisspannung, sondern nur der Zwischenkreisstrom umgekehrt werden. Für diesen umgekehrten Strom ist ein gesonderter Gleichrichter notwendig, so dass der Zwischenkreisumrichter eingangsseitig zwei antiparallel geschaltete Gleichrichter aufweist. Sobald auf den Rückspeisebetrieb übergegangen wird, muss auf den zweiten Gleichrichter umgeschaltet werden.

Aufgabe der Erfindung ist es daher, ein Verfahren zum Betrieb des Zwischenkreisumrichters und eine Schaltungsanordnung zur Durchführung des Verfahrens anzugeben, bei dem die eingangsseitigen, antiparallel geschalteten Gleichrichter umgeschaltet werden, sobald die Voraussetzungen für eine Rückspeisung vorliegen.

Die Aufgabe wird erfindungsgemäss dadurch gelöst, dass 30° nach jedem Wechsel der Ansteuerkombination der Schalter des Wechselrichters die Polarität des Zwischenkreisstroms am Wechselrichtereingang abgefragt wird, dass der Istwert der Zwischenkreisspannung mit einem Sollwert verglichen wird, dass der in Rückspeiserichtung angeordnete Stromrichter des Zwischenkreisumrichters angesteuert wird, solange die abgefragte Polarität des Zwischenkreisstroms negativ ist und der Istwert der Zwischenkreisspannung um einen festgelegten Betrag über ihrem Sollwert liegt und dass der in Einspeiserichtung angeordnete Stromrichter des Zwischenkreisumrichters eingeschaltet wird, wenn diese Bedingung nicht erfüllt ist.

Mit diesem Verfahren ist es möglich, bei einem Zwischenkreisumrichter mit Gleichspannungs-Zwischenkreis die Voraussetzungen für eine Rückspeisung von einer Last in eine Versorgungsspannungsquelle zuverlässig zu erkennen und den eingangsseitigen Stromrichter in den Wechselrichterbetrieb umzuschalten. Damit wird es möglich, auch Zwischenkreisumrichter mit Gleichspannungs-Zwischenkreis in zwei Energierichtungen zu betreiben.

Bei einer Schaltungsanordnung zur Durchführung des Verfahrens wird vorteilhafterweise zur Polaritätsabfrage in einer Polaritätsabfragestufe ein Messwert für den Zwischenkreisstrom über einen elektronischen Messwert-Schalter und ein Glättungsglied einem Operationsverstärker zugeführt, an dessen Ausgang das gewünschte Polaritätssignal ansteht, wobei der elektronische Messwert-Schalter von einem Steuersatz des Wechselrichters angesteuert und 30° nach jedem Wechsel der Ansteuerkombination der Schalter des Wechselrichters für kurze Zeit geschlossen wird. Damit kann festgestellt werden, ob Energie aus dem Zwischenkreis in die Last oder von der Last in den Zwischenkreis fliesst.

Vorteilhafterweise sind zur Bildung eines Messwerts für den Zwischenkreisstrom die Ausgangsströme in den drei Phasen des Wechselrichters je einem Schalter sowie über Invertierglieder drei weiteren Schaltern eines Multiplexers zugeführt, wobei die zweiten Anschlüsse aller Schalter mit einem gemeinsamen Ausgang verbunden sind, an dem der gewünschte Messwert für den Zwischenkreisstrom ansteht und wobei die Schalter in Abhängigkeit von der Ansteuerkombination der Schalter des Wechselrichters angesteuert werden.

Damit kann der Zwischenkreisstrom also aus den Ausgangsströmen des Wechselrichters ermittelt werden. Dies hat den Vorteil, dass der Gleichstrom im Zwischenkreis nicht gesondert gemessen werden muss, sondern dass die im Ausgangskreis des Wechselrichters üblicherweise ohnehin vorhandenen Stromwandler zur Bildung eines Messwerts für den Zwischenkreisstrom ausgenutzt werden können.

Vorteilhafterweise kann die gleichgerichtete und geglättete Ausgangsspannung des Zwischenkreis-Umrichters als Istwert der Zwischenkreisspannung sowie der Sollwert für diese Ausgangsspannung je einem Eingang einer Vergleicherstufe zugeführt sein, die ausgangsseitig ein Signal für die Spannungs-Überhöhung abgibt, sobald die Ausgangsspannung des Zwischenkreis-Umrichters den Sollwert um einen festgelegten Betrag überschreitet. Damit kann auch das Signal für die Spannungs-Überhöhung ohne direkte Messung der Zwischenkreisspannung gebildet werden. Die Zwischenkreisspannung wird vielmehr mittelbar aus der üblicherweise ohnehin gemessenen Ausgangsspannung des Zwischenkreis-Umrichters gebildet.

Die Umschaltung der antiparallelen Stromrichter erfolgt zweckmässigerweise, indem das Polaritätssignal und das Signal für die Spannungs-Überhöhung den beiden Eingängen eines UND-Gatters zugeführt sind, dessen Ausgang mit einer Umschalteinrichtung für die beiden Stromrichter verbunden ist.

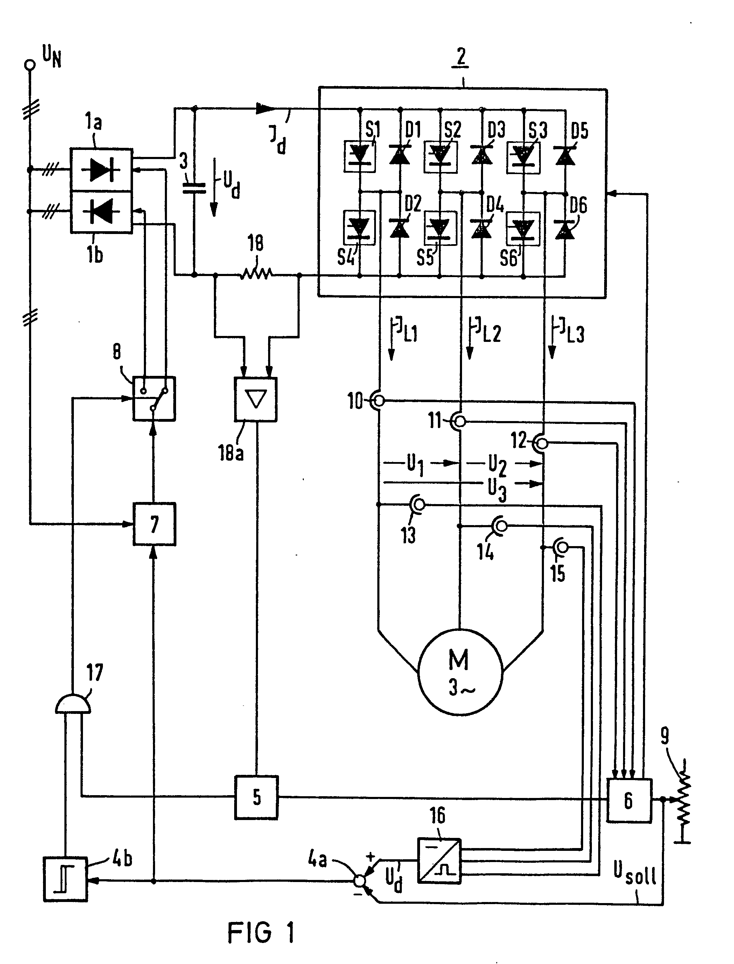

Ein Ausführungsbeispiel der Erfindung wird nachfolgend anhand der Figuren 1 bis 6 erläutert.

Fig. 1 zeigt ein Blockschaltbild eines Zwischenkreis-Umrichters, der mit dem erfindungsgemässen Verfahren betrieben wird. Dabei sind an ein Versorgungsnetz mit der Spannung $U_N$ zwei antiparallel geschaltete, gesteuerte Stromrichter 1a und 1b, z.B. in Drehstrom-Brückenschaltung angeschlossen. Den beiden Stromrichtern 1a und 1b ist ein Wechselrichter 2 nachgeschaltet. Der Wechselrichter 2 kann, wie nachfolgend erläutert, auch als Gleichrichter betrieben werden, wobei jedoch auch für diesen Betriebsfall aus Einheitlichkeitsgründen die Bezeichnung «Wechselrichter» beibehalten wird. Den Ausgangsklemmen der Stromrichter 1a und 1b ist ein Kondensator 3 mit relativ hoher Kapazität parallel geschaltet, so dass ein Zwischenkreis mit eingeprägter Spannung vorliegt. An den dreiphasigen Wechselspannungsausgang des Wechselrichters 2 ist als Last ein Motor M angeschlossen. Die antiparallel geschalteten Stromrichter 1a und 1b sowie der Wechselrichter 2 werden von je einem Steuersatz 6 bzw. 7 angesteuert. Für diesen Zweck geeignete Steuersätze sind beispielsweise in dem Buch «Industrieelektronik» von D.Ernst und D.Ströhle, 1973, Seiten 52 bis 56 beschrieben. Der Steuersatz 7 steuert über eine Umschalteinrichtung 8 entweder den Stromrichter 1a oder den Stromrichter 1b an. Dem Steuersatz 7 ist als Führungsgrösse die Netzspannung $U_N$ zugeführt.

Von einem Sollwertgeber 9 wird eine Sollspannung $U_{soll}$ für den Wechselrichter 2 erzeugt, die dem Steuersatz 6 zugeführt ist. Ausserdem sind drei, mit Eingängen des Steuersatzes 6 verbundene Stromwandler 10 bis 12 vorgesehen, über die der Steuersatz 6 Messwerte für die Ausgangsströme $I_{L1}$ bis $I_{L3}$ erhält.

Solange der Motor M Energie aufnimmt, ist der Stromrichter 1a, der im Gleichrichter-Betrieb arbeitet, in Betrieb und wandelt die Eingangs-Wechselspannung $U_N$ in eine Gleichspannung $U_d$ im Zwischenkreis um. Die Gleichspannung $U_d$ wird vom Wechselrichter 2 wiederum in eine dreiphasige Wechselspannung variabler Frequenz zum Betrieb des Motors M umgewandelt. Die einzelnen verketteten Spannungen dieser dreiphasigen Wechselspannung sind mit $U_1$ bis $U_3$ bezeichnet.

Wenn der Motor M von der Wellenseite her angetrieben wird oder wenn die Ausgangsfrequenz des Wechselrichters 2 zurückgeht, d.h. der Motor M abgebremst wird, so erfolgt ein Energierückfluss vom Motor M über die Freilaufdioden D1 bis D6 in den Zwischenkreiskondensator 3. Dabei kehrt sich die Richtung des Wirkanteils des Zwischenkreisstroms $I_d$ um während die Polarität der Zwischenkreisspannung $U_d$ erhalten bleibt. Um die im generatorischen Betrieb vom Motor M gelieferte Leistung in das Netz zurückspeisen zu können, muss der als Gleichrichter betriebene Stromrichter 1a abgeschaltet und der als Wechselrichter betriebene Stromrichter 1b eingeschaltet werden. Um diese Umschaltung, die über die Umschalteinrichtung 8 erfolgt, auszulösen, muss zunächst überprüft werden, ob tatsächlich eine Rückspeisung des Motors M in den Zwischenkreiskondensator 3 vorliegt. Diese Bedingung muss zuverlässig erfasst werden, da eine falsche Umschaltung zu Betriebsstörungen führen würde. Eine Rückspeisung des Motors M in den Zwischenkreiskondensator 3 hat eine Erhöhung der Zwischenkreisspannung $U_d$ sowie eine Polaritätsumkehr des Wirkanteils des Zwischenkreisstroms $I_d$ zur Folge. Dabei müssen beide Kriterien gleichzeitig vorliegen. Die Erfassung der Zwischenkreisspannung $U_d$ als Umschaltkriterium allein reicht nicht aus, da bei leerlaufendem Motor die geringfügige vorhandene Welligkeit der Zwischenkreisspannung häufige Umschaltanforderungen erzeugen würde, was zu einem unruhigen Betrieb des Umrichters führen würde. Auch die Polaritätsumkehr des Zwischenkreisstroms $I_d$ als einzige Bedingung zur Umschaltung auf den Stromrichter 1b reicht nicht aus, da bei leichtem Generatorbetrieb die zurückgespeiste Energie zur Deckung der Wechselrichterverluste benötigt wird.

Aus den genannten Gründen wird also eine Umschaltung von dem im Gleichrichter-Betrieb arbeitenden Stromrichter 1a auf den im Wechselrichterbetrieb arbeitenden Stromrichter 1b nur dann vorgenommen, wenn sowohl die Zwischenkreisspannung $U_d$ angestiegen ist als auch der Wirkanteil des Zwischenkreisstroms $I_d$ seine Polarität umgekehrt hat. Der Anstieg der Zwischenkreisspannung $U_d$ wird ermittelt, indem diese mit dem Sollwert $U_{soll}$ für die Ausgangsspannung verglichen wird.

Da der Zwischenkreis im allgemeinen keine Spannungsmesseinrichtung enthält, wird die Zwischenkreisspannung $U_d$ mittelbar aus den Ausgangsspannungen $U_1$ bis $U_3$ des Zwischenkreis-Umrichters, die ohnehin zur Steuerung des Umrichters mit den Spannungswandlern 13 bis 15 erfasst werden ermittelt. Diese Spannungen stimmen nämlich, sofern die der betreffenden Phase zugeordneten Schalter S1 bis S6 des Wechselrichters 2 geschlossen sind, mit der Zwischenkreisspannung $U_d$ überein, wenn man den Spannungsabfall an den Schaltern S1 bis S6 vernachlässigt. Zur Ermittlung der Zwischenkreisspannung $U_d$ werden die Ausgangsspannungen des Wechselrichters 2 mit dem Gleichrichter 16 gleichgerichtet und geglättet, so dass am Ausgang des Gleichrichters 16 ein Wert ansteht, der mit der Zwischenkreisspannung $U_d$ in dem hier interessierenden Toleranzbereich übereinstimmt. Die so ermittelte Zwischenkreisspannung $U_d$ wird in dem Vergleicher 4 mit dem Sollwert $U_{soll}$ verglichen. Der Vergleicher 4 besteht aus einer Subtraktionsstufe 4a und einer nachgeschalteten Grenzwertstufe 4b. Der Subtraktionsstufe 4a ist die Zwischenkreisspannung $U_d$ über einen Additionseingang und die Sollspannung $U_{soll}$ über einen Subtraktionseingang zugeführt. Wenn die Zwischenkreisspannung $U_d$ die Sollspannung $U_{soll}$ um einen mit dem Grenzwertgeber 4b vorgesehenen Betrag überschreitet, so gibt der Grenzwertgeber 4b ein Signal ab, das einem ersten Eingang eines UND-Gatters 17 zugeführt ist. Damit wurde also die erste Bedingung für das Umschalten vom Stromrichter 1a auf den Stromrichter 1b ermittelt.

Es ist nun noch die Polarität des Wirkanteils des Zwischenkreisstroms $I_d$ festzustellen. Dabei darf lediglich der Wirkanteil des Zwischenkreisstroms $I_d$

herangezogen werden, da der Zwischenkreisstrom $I_d$ selbst periodisch seine Richtung wechselt.

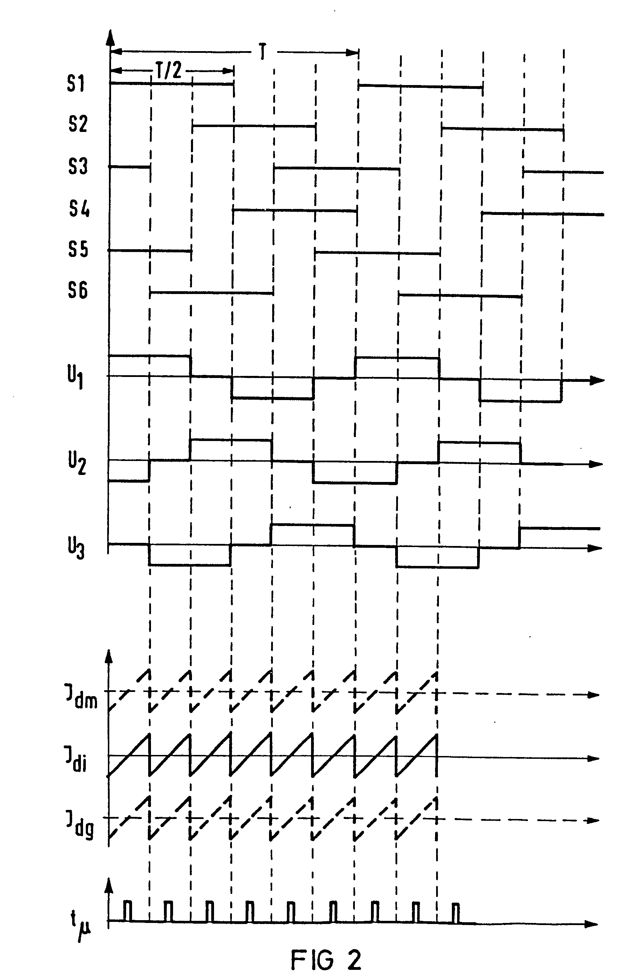

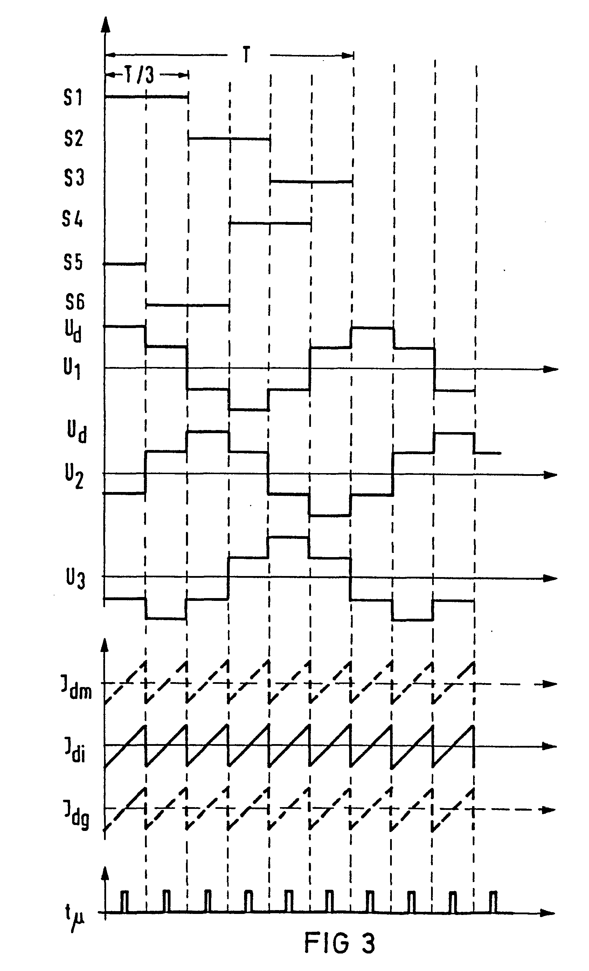

Ein Verfahren zur Ermittlung der Polarität des Wirkanteils des Zwischenkreisstroms $I_d$ wird nachfolgend anhand der Figuren 2 und 3 näher erläutert.

Fig. 2 zeigt den Verlauf der geglätteten Ausgangsspannungen $U_1$ bis $U_3$ sowie des Zwischenkreisstroms $I_d$ für den Fall der Vollaussteuerung des Wechselrichters 2. Dabei werden die beiden zu einem Brückenzweig gehörenden elektronischen Schalter zeitlich um je eine Halbperiode gegeneinander versetzt jeweils für eine Halbperiode eingeschaltet. Die Einschaltphasen zweier benachbarter Brückenzweige sind um jeweils T/3 gegeneinander versetzt. Wie der Fig. 1 zu entnehmen ist, ist beispielsweise die Spannung $U_1$ gleich der Zwischenkreisspannung $U_d$, solange die Schalter S1 und S5 gleichzeitig eingeschaltet sind, gleich Null, solange die Schalter S1 und S2 gleichzeitig eingeschaltet sind und gleich der negativen Zwischenspannung $U_d$, solange die Schalter S2 und S4 gleichzeitig eingeschaltet sind. In analoger Weise ergibt sich auch der Verlauf der Spannungen $U_2$ und $U_3$.

Bei rein induktiver Belastung des Wechselrichters 2 ist der in diesem Fall mit $I_{di}$ bezeichnete Zwischenkreisstrom ein reiner Wechselstrom, da vom Zwischenkreiskondensator 3 keine Wirkleistung aufgenommen oder abgegeben wird. Der Strom $I_{di}$ weist daher einen sägezahnförmigen Verlauf mit der Periodendauer T/6 auf. Die Ableitung dieses Stromverlaufs aus den Stellungen der Schalter S1 bis S6 ist in dem Buch Manfred Meyer «Selbstgeführte Thyristor-Stromrichter», 3. Auflage, Seiten 197 bis 199 detailliert beschrieben und soll daher hier nicht näher erläutert werden.

Wenn nun zur induktiven Last eine ohmsche Last hinzukommt, so weist der Zwischenkreisstrom $I_d$ einen positiven Gleichanteil auf, d.h. die Kurve des Stromverlaufs wird nach oben verschoben. Der so entstehende Zwischenkreisstrom, der im motorischen Betrieb des Motors M auftritt, ist in Fig. 2 mit $I_{dm}$ bezeichnet. Läuft der Motor M dagegen im Generatorbetrieb, so wird zu dem induktiven Zwischenkreisstrom $I_{di}$ ein negativer Gleichanteil addiert und es entsteht der mit $I_{dg}$ bezeichnete Stromverlauf.

Aufgrund des Stromverlaufs des Zwischenkreisstroms $I_d$ ergibt sich also, dass eine einfache Polaritätserfassung des Zwischenkreisstroms $I_d$ als Kriterium für die vorliegende Energierichtung nicht ausreicht. Im rein induktiven Belastungsfall, aber auch bei kleinem motorischen oder generatorischem Wirkstrom wechselt der Zwischenkreisstrom $I_d$, wie Fig. 2 zu entnehmen ist, nämlich ständig sein Vorzeichen. Die Polarität des Zwischenkreisstroms $I_d$ wird daher lediglich zu bestimmten Zeitpunkten $t_\mu$ abgefragt. Diese Zeitpunkte $t_\mu$ liegen jeweils 30° oder T/12 nach jedem Wechsel der Ansteuerkombination der Schalter S1 bis S6. Wie Fig. 2 zeigt, ist zu diesem Zeitpunkt der Zwischenkreisstrom $I_d$ bei rein induktiver Last nämlich Null, bei Wirkleistungsabgabe, also motorischem Betrieb positiv und bei Wirkleistungsaufnahme, also generatorischem Betrieb negativ. Damit liegt also ein sicheres Kriterium für die Wirkstromrichtung vor. Da die Ansteuerkombination der Schalter S1 bis S6 mit der Periode T/6 wechselt, erfolgt auch die Polaritätsabfrage mit dieser Periode bzw. mit der sechsfachen Frequenz der Ausgangsspannung des Wechselrichters.

In Fig. 2 wurden die Einschaltzeiten der Schalter S1 bis S6 sowie die Spannungs- und Stromdiagramme für den Fall der Vollaussteuerung des Wechselrichters dargestellt. Die hier dargestellten Überlegungen gelten jedoch auch dann, wenn der Wechselrichter 2 nicht in Vollaussteuerung betrieben wird. In Fig. 3 sind die Einschaltzeiten der Schalter S1 bis S6 sowie der Verlauf der Phasenspannungen $U_1$ bis $U_3$ und des Zwischenkreisstroms $I_d$ für den Fall dargestellt, dass die Schalter S1 bis S6 mit 120°-Blöcken, also mit einem Steuerwinkel von $\pi/3$ angesteuert werden. In diesem Fall ergibt sich ein treppenförmiger Spannungsverlauf, bei dem die Phasenspannungen $U_1$ bis $U_3$ zwischen der vollen Zwischenkreisspannung $U_d$, der halben Zwischenkreisspannung $U_d$ und den entsprechenden negativen Werten wechselt. Die Ableitung der Phasenspannungen $U_1$ bis $U_3$ aus den Schaltzuständen der Schalter S1 bis S3 ist in dem Buch Manfred Meyer «Selbstgeführte Thyristor-Stromrichter», 3. Auflage, Seiten 200 bis 201 dargestellt und soll daher hier nicht näher erläutert werden. Auch bei dieser Aussteuerung besitzt der Zwischenkreisstrom $I_d$ bei rein induktiver Belastung einen sägezahnförmigen Verlauf. Die Sägezahnkurve wird um einen Gleichanteil in positiver Richtung verschoben, wenn der Motor M Wirklast aufnimmt und in negativer Richtung, wenn dieser Wirkleistung abgibt. Da auch in diesem Ansteuerfall bei rein induktiver Belastung der Zwischenkreisstrom $I_d$ 30° nach jedem Wechsel der Schalterkombination der Schalter S1 bis S6 durch Null geht, erfolgt die Polaritätsabfrage zu einem Zeitpunkt $t_\mu$, der jeweils 30° nach jedem Wechsel der Ansteuerkombination oder, bezogen auf den Spannungsverlauf, 30° nach jedem Nulldurchgang einer Phasenspannung $U_1$ bis $U_3$ liegt.

Die Polaritätsabfragezeitpunkte $t_\mu$ können auf einfache Weise aus dem Wechselrichter-Steuersatz 6 abgeleitet werden. Wie in der bereits genannten Literaturstelle D.Ernst/D.Ströhle «Industrieelektronik», 1973, Seite 55 erläutert, ist der Wechselrichter-Steuersatz aus einem Frequenzgeber mit einem nachgeschalteten Ringzähler aufgebaut. Es müssen lediglich zusätzliche Zähler vorgesehen werden, deren Ausgänge auf die Zeitpunkte $t_\mu$ programmiert sind.

Schaltungsmässig ist die Polaritätserfassung im Ausführungsbeispiel nach Fig. 1 dadurch realisiert, dass im Zwischenkreis ein vom Zwischenkreisstrom $I_d$ durchflossener Mess-Widerstand 18 angeordnet ist. Dem Widerstand 18 ist ein Differenzverstärrker 18a nachgeschaltet, an dessen Ausgang ein Messwert für den Zwischenkreisstrom $I_d$ ansteht. Dieser Messwert wird einer vom Wechselrichter-Steuersatz 6 gesteuerten Polaritätsabfragestufe 5 zugeführt. Das mit einer Polaritätsabfragestufe 5 gewonnene Polaritätssignal wird einem zweiten Eingang des UND-Gatters 17 zugeführt, an dessen erstem Eingang, wie bereits beschrieben, das Spannungs-Überhöhungssignal ansteht. Wenn sowohl eine Spannungs-Überhöhung vorliegt als auch durch die Polaritätsabfrage des Zwischenkreisstroms eine Rückspeisung des Motors festgestellt wurde, so ist die mit dem UND-Gatter 17 realisierte UND-Bedingung erfüllt und der Umschalter 8 wird betätigt. Damit werden die Steuerimpulse des Netzsteuersatzes 7 vom Stromrichter 1a auf den im Wechselrichterbetrieb arbeitenden Stromrichter 1b umgeschaltet, so dass dieser Energie vom Zwischenkreiskondensator 3 in das Netz zurückspeist. Damit wird also die vom Motor M im generatorischen Betrieb angegebene Energie über den Zwischenkreis in das Netz zurückgespeist.

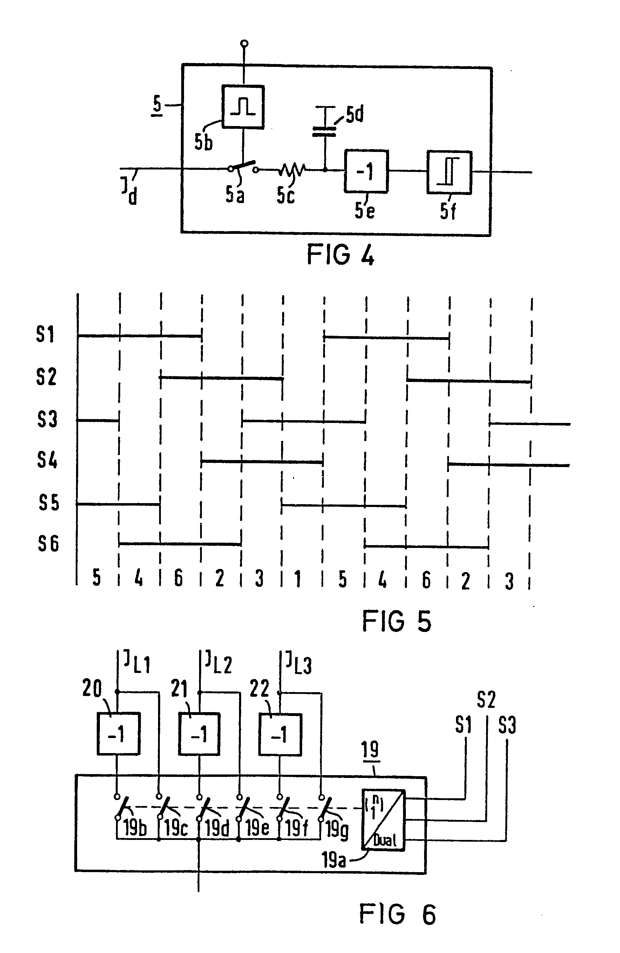

Ein Ausführungsbeispiel für die Polaritätsabfragestufe ist in Fig. 4 dargestellt. Der Messwert für den Zwischenkreisstrom $I_d$ wird über einen Messwert-Schalter 5a einem aus dem Längswiderstand 5c und aus dem Querkondensator 5d bestehenden Glättungsglied zugeführt. Der Messwert-Schalter 5a wird von einem Impulsgeber 5b eingeschaltet, der, wie beschrieben, vom Wechselrichter-Steuersatz 6 30° nach jedem Wechsel der Ansteuerkombination der Schalter S1 bis S6 des Wechselrichters 2 angestossen wird. Damit wird also der Wert des Stroms $I_d$ jeweils zum Zeitpunkt $t_\mu$ abgefragt, wobei mit dem Glättungsglied 5c, 5d aus den Einzelimpulsen ein Dauersignal gewonnen wird. Dieses Dauersignal wird mit dem Inverter 5e invertiert. Dem Inverter 5e ist ein Grenzwertgeber 5f nachgeschaltet, der anspricht, wenn das geglättete Abfragesignal einen vorgegebenen negativen Wert überschreitet. Am Ausgang des Grenzwertgebers 5f steht also das gewünschte Polaritätssignal an, das den Wert «1» aufweist, wenn der Motor M in den Zwischenkreis zurückspeist. Mit diesem Polaritätssignal wird, wie beschrieben, das UND-Gatter 17 angesteuert.

Bei dem bisher beschriebenen Ausführungsbeispiel ist zur Polaritätsabfrage eine Stromerfassung im Zwischenkreis erforderlich. Da stets einer der Ausgangsströme $I_{L1}$ bis $I_{L3}$ identisch mit dem Zwischenkreisstrom $I_d$ ist, besteht jedoch auch die Möglichkeit, durch entsprechende Auswahl der Ausgangsströme den Zwischenkreisstrom $I_d$ aus den Ausgangsströmen $I_{L1}$ bis $I_{L3}$ zu ermitteln. Diese Ausgangsströme werden üblicherweise ohnehin durch Stromwandler in den Ausgangsleitungen erfasst. In Fig. 5 sind nochmals die Ansteuerdiagramme für die Schalter S1 bis S6 nach Fig. 1 dargestellt. Da die beiden in einem Brückenzweig liegenden Schalter S1 bis S6 jeweils invers zueinander angesteuert werden, lässt sich jede Schaltkombination der sechs Schalter S1 bis S6 durch die Schaltkombination beispielsweise der drei Schalter S1 bis S3 vollständig kennzeichnen. Man kann daher jede Schaltkombination mit einer Dualzahl kennzeichnen, bei der beispielsweise der Schaltzustand des Schalters S1 die höchstwertige Stelle, der Schaltzustand des Schalters S2 die zweithöchste Stelle und der Schaltzustand des Schalters S3 die niedrigste Stelle darstellt. In Fig. 5 sind die den jeweiligen Schalterzuständen der Schalter S1 bis S6 zugeordneten Dualzahlen in Dezimalschreibweise gekennzeichnet.

Eine Betrachtung des Schaltdiagramms nach Fig. 5 in Zusammenhang mit der Brückenschaltung des Wechselrichters 2 nach Fig. 1 ergibt, dass der Zwischenkreisstrom $I_d$ nach folgendem Schema aus den Ausgangsströmen $I_{L1}$ bis $I_{L3}$ bestimmt werden kann:

Wenn die Schalter S1 und S3 eingeschaltet sind, also bei der mit 5 gekennzeichneten Ansteuerkombination, ist der Zwischenkreisstrom gleich dem negativen Ausgangsstrom $I_{L2}$, da der Zwischenkreisstrom $I_d$ sich auf die Schalter S1 bis S3 verteilt, durch den Motor fliesst und als Strom $-I_{L2}$ über den Schalter S5 wieder in den Zwischenkreis zurückfliesst. Wenn nur der Schalter S1 eingeschaltet ist, also die Ansteuerkombination 4 vorliegt, so kann der Zwischenkreisstrom $I_d$ nur über den Schalter S1 fliessen und ist damit mit dem Ausgangsstrom $I_{L1}$ identisch usw.

Der Zwischenkreisstrom $I_d$ kann also aus den Ausgangsströmen $I_{L1}$ bis $I_{L3}$ bzw. aus deren invertierten Werten ermittelt werden, indem man diese über Schalter auswählt, die in Abhängigkeit von der Ansteuerkombination der Schalter S1 bis S3 angesteuert werden. Fig. 6 zeigt ein Ausführungsbeispiel für eine derartige Auswerteschaltung. Dabei sind den Eingängen eines Multiplexers 19 die Ausgangsströme $I_{L1}$ bis $I_{L3}$ direkt und über Invertierglieder 20 bis 22 invertiert zugeführt. Die Ansteuereingänge des Multiplexers 19 sind mit den Ansteuerleitungen der Schalter S1 bis S3 verbunden.

Der Multiplexer 19 enthält sechs Schalter 19b bis 19g, über die die Eingänge mit einem gemeinsamen Ausgang verbunden sind. Ferner ist ein Dekoder 19a vorhanden, der in Abhängigkeit von der mit der Ansteuerkombination der Schalter S1 bis S3 vorgegebenen Dualzahl die Schalter 19b bis 19g ansteuert. Der Dekoder 19 weist sechs Ausgänge auf, die jeweils einer Dualzahl 1 bis 6 gemäss Fig. 5 zugeordnet sind. Dabei ist der der Dualzahl 1 zugeordnete Ausgang mit dem Schalter 19g, der der Dualzahl 2 zugeordnete Ausgang mit dem Schalter 19e, der der Dualzahl 3 zugeordnete Ausgang mit dem Schalter 19b, der der Dualzahl 4 zugeordnete Ausgang mit dem Schalter 19c, der der Dualzahl 5 zugeordnete Ausgang mit dem Schalter 19d, und der der Dualzahl 6 zugeordnete Ausgang mit dem Schalter 19f verbunden. Damit wird also nach dem bereits erläuterten Schema beispielsweise der Schalter 19d angesteuert, wenn die Schalter S1 und S3 eingeschaltet sind und somit der invertierte Ausgangsstrom $I_{L2}$ als Zwischenkreisstrom $I_d$ verwendet. Wenn nur der Schalter S1 eingeschaltet ist, so wird der Schalter 19c eingeschaltet und der Ausgangsstrom $I_{L1}$ als Zwischenkreisstrom $I_d$ verwendet usw. Der am Ausgang des Multiplexers 19 anstehende Messwert für den Zwischenkreisstrom $I_d$ wird der Polaritätsabfragestufe 5 gemäss Fig. 1 zugeführt. Mit der Schaltung nach Fig. 6 kann also der Messwiderstand 18 und der Differenzverstärker 18a nach Fig. 1 ersetzt werden.

## Patentansprüche

1. Verfahren zum Betrieb eines Zwischenkreisumrichters mit eingeprägter Zwischenkreis-Gleichspannung für zwei Energierichtungen mit zwei antiparallel geschalteten gesteuerten Stromrichtern, denen über einen Zwischenkreis ein Wechselrichter (2) in Drehstrom-Brückenschaltung nachgeschaltet ist, dadurch gekennzeichnet, dass 30° nach jedem Wechsel der Ansteuerkombination der Schalter (S1 bis S6) des Wechselrichters (2) die Polarität des Zwi-

schenkreisstroms ($I_d$) am Wechselrichtereingang abgefragt wird, dass der Istwert der Zwischenkreisspannung ($U_d$) mit einem Sollwert ($U_{soll}$) verglichen wird, dass der in Rückspeiserichtung angeordnete Stromrichter (1b) des Zwischenkreisumrichters angesteuert wird, solange die abgefragte Polarität des Zwischenkreisstroms ($I_d$) negativ ist und der Istwert der Zwischenkreisspannung ($U_d$) um einen festgelegten Betrag über dem Sollwert ($U_{soll}$) liegt und dass der in Einspeiserichtung angeordnete Stromrichter (1a) des Zwischenkreisumrichters eingeschaltet wird, wenn diese Bedingung nicht erfüllt ist.

2. Schaltungsanordnung zur Durchführung eines Verfahrens nach Anspruch 1, dadurch gekennzeichnet, dass zur Polaritätsabfrage in einer Polaritätsabfragestufe (5) ein Messwert für den Zwischenkreisstrom ($I_d$) über einen elektronischen Messwert-Schalter (5a) und ein Glättungsglied (5c, 5d) einem Operationsverstärker (5e) zugeführt ist, an dessen Ausgang das gewünschte Polaritätssignal ansteht, wobei der elektronische Messwert-Schalter (5a) von einem Steuersatz (6) des Wechselrichters (2) angesteuert und 30° nach jedem Wechsel der Ansteuerkombination der Schalter (S1 - S6) des Wechselrichters (2) für kurze Zeit geschlossen wird.

3. Schaltungsanordnung nach Anspruch 2, dadurch gekennzeichnet, dass zur Bildung eines Messwerts für den Zwischenkreisstrom ($I_d$) die Ausgangsströme ($I_{L1}$ - $I_{L3}$) in den drei Phasen des Wechselrichters (2) je einem Schalter (19c, 19e, 19g) sowie über Inverterglieder (20 - 22) drei weiteren Schaltern (19b, 19d, 19f) eines Multiplexers (19) zugeführt sind, dass die zweiten Anschlüsse aller Schalter (19b - 19g) mit einem gemeinsamen Ausgang verbunden sind, an dem der gewünschte Messwert für den Zwischenkreisstrom ($I_d$) ansteht und dass die Schalter (19b - 19g) in Abhängigkeit von der Ansteuerkombination der Schalter (S1 - S6) des Wechselrichters (2) angesteuert werden.

4. Schaltungsanordnung nach Anspruch 2 oder 3, dadurch gekennzeichnet, dass die gleichgerichtete und geglättete Ausgangsspannung ($U_1$ - $U_3$) des Zwischenkreis-Umrichters als Istwert der Zwischenkreisspannung sowie der Sollwert für diese Ausgangsspannung ($U_{soll}$) je einem Eingang einer Vergleicherstufe (4) zugeführt sind, die ausgangsseitig ein Signal für die Spannungs-Überhöhung abgibt, sobald die Ausgangsspannung ($_1$ - $U_3$) des Zwischenkreis-Umrichters den Sollwert ($U_{soll}$) um einen festgelegten Betrag überschreitet.

5. Schaltungsanordnung nach einem der Ansprüche 2 bis 4, dadurch gekennzeichnet, dass das Polaritätssignal und das Signal für die Spannungs-Überhöhung den beiden Eingängen eines UND-Gatters (14) zugeführt sind, dessen Ausgang mit einer Umschalteinrichtung (8) für die beiden Stromrichter (1a, 1b) verbunden ist.

## Claims

1. Method of operating a dc link converter with an impressed link dc voltage, for two power directions and having two anti-parallel-connected controlled power converters, to which converters an inverter (2) is connected on the output side in three-phase current bridge connection via a link circuit, characterised in that the polarity of the link circuit current ($I_d$) at the inverter input is interrogated 30° after each change in the control combination of the switches (S1 - S6) of the inverter (2), in that the actual value of the link circuit voltage ($U_d$) is compared with a desired value ($U_{soll}$), in that the power converter (1b) of the dc link converter arranged in the feedback direction is controlled as long as the interrogated polarity of the link circuit current ($I_d$) is negative and the actual value of the link circuit voltage ($U_d$) lies above the desired value ($U_{soll}$) by a predetermined amount, and in that the power converter (1a) of the dc link converter arranged in the feed-in direction is switched on if this condition is not fulfilled.

2. Circuit arrangement for carrying out a method according to claim 1, characterised in that to interrogate polarity in a polarity-interrogation stage (5), a measured value for the link circuit current ($I_d$) is fed via an electronic measured value switch (5a) and a smoothing member (5c, 5d) to an operational amplifier (5e), at whose output is the desired polarity signal, the elentronic measured value switch (5a) being triggered by a control unit (6) of the inverter (2) and being closed for a short time 30° after each change in the control combination of the switches (S1 - S6) of the inverter (2).

3. Circuit arrangement according to claim 2, characterised in that to form a measured value for the link circuit current ($I_d$), the output currents ($I_{L1}$ - $I_{L3}$) in the three phases of the inverter (2) are fed each to one switch (19c, 19e, 19g) and via inverting members (20 - 22) to three further switches (19b, 19d, 19f) of a multiplexer (19), in that the second terminals of all the switches (19b - 19g) are connected to a common output, at which is the desired measured value for the link circuit current ($I_d$), and in that the switches (19b - 19g) are controlled in dependence on the control combination of the switches (S1 - S6) of the inverter (2).

4. Circuit arrangement according to claim 2 or 3, characterised in that the rectified and smoothed output voltage ($U_1$ - $U_3$) of the dc link converter as the actual value of the link circuit voltage, and the desired value for this output voltage ($U_{soll}$) are fed to respective inputs of a comparing stage (4), which emits on the output side a signal for the excess increase of voltage as soon as the output voltage ($U_1$ - $U_3$) of the dc link converter exceeds the desired value ($U_{soll}$) by a predetermined amount.

5. Circuit arrangement according to one of claims 2 to 4, characterised in that the polarity signal and the signal for the excess voltage are fed to the inputs of an AND gate (14) whose output is connected to a switch-over device (8) for both power converters (1a, 1b).

## Revendications

1. Procédé pour faire fonctionner un convertisseur indirect avec application d'une tension continue au circuit intermédiaire, où la circulation de l'énergie est réversible, comprenant deux convertisseurs commandés montés tête-bêche, qui sont suivis, à la suite d'un circuit intermédiaire, par un onduleur (2) à montage en pont triphasé, caractérisé en ce que, 30° après chaque changement de la combinaison de commande d'amorçage des interrupteurs (S1 - S6) de l'onduleur (2), la polarité du courant de circuit intermédiaire ($I_d$) est explorée à l'entrée de l'onduleur, que la valeur réelle de la tension de circuit intermédiaire ($U_d$) est comparée avec une valeur de consigne ($U_{soll}$), que le convertisseur (1b) disposé dans le sens de la récupération du convertisseur indirect est commandé tant que la polarité explorée du courant de circuit intermédiaire ($I_d$) est négative et la valeur réelle de la tension de circuit intermédiaire ($U_d$) est supérieure d'une quantité déterminée à sa valeur de consigne ($U_{soll}$) et que le convertisseur (1a) disposé dans le sens de l'alimentation du convertisseur indirect est enclenché lorsque cette condition n'est pas remplie.

2. Montage pour la mise en oeuvre d'un procédé selon la revendication 1, caractérisé en ce que, pour l'exploration de la polarité, une valeur de mesure pour le courant de circuit intermédiaire ($I_d$) est appliquée, dans un étage d'échantillonnage de polarité (5), à travers un interrupteur électronique de valeur de mesure (5a) et un élément de lissage (5c, 5d), à un amplificateur opérationnel (5e), à la sortie duquel apparaît le signal de polarité désiré, l'interrupteur électronique de valeur de mesure (5a) étant commande par une unité de commande (6) de l'onduleur (2) et étant fermé brièvement 30° après chaque changement de la combinaison d'amorçage des interrupteurs (S1 - S6) de l'onduleur (2).

3. Montage selon la revendication 2, caractérisé en ce que, en vue de la formation d'une valeur de mesure pour le courant de circuit intermédiaire ($I_d$), les courants de sortie ($I_{L1}$ - $I_{L3}$) dans les trois phases de l'onduleur (2) sont appliqués chacun à un interrupteur (19c, 19e, 19g), ainsi qu'à travers des éléments inverseurs (20 - 22) à trois autres interrupteurs (19b, 19d, 19f) d'un multiplexeur (19), que les secondes bornes de tous les interrupteurs (19b - 19g) sont reliées à une sortie commune à laquelle apparaît la valeur de mesure désirée pour le courant de circuit intermédiaire ($I_d$) et que les interrupteurs (19b - 19g) sont commandés en fonction de la combinaison d'amorçage des interrupteurs (S1 - S6) de l'onduleur (2).

4. Montage selon la revendication 2 ou 3, caractérisé en ce que la tension de sortie redressée et lissée ($U_1$ - $U_3$) du convertisseur indirect, en tant que valeur réelle de la tension de circuit intermédiaire, de même que la valeur de consigne pour cette tension de sortie ($U_{soll}$), sont appliquées chacune à une entrée d'un étage comparateur (4) qui délivre à sa sortie un signal pour la surélévation de tension dès que la tension de sortie ($U_1$ - $U_3$) du convertisseur indirect dépasse la valeur de consigne ($U_{soll}$) d'une quantité déterminée.

5. Montage selon une des revendications 2 à 4, caractérisé en ce que le signal de polarité et le signal pour la surélévation de tension sont appliquées aux deux entrées d'une porte ET (17) dont la sortie est reliée à un dispositif de commutation (8) pour les deux convertisseurs (1a, 1b).

FIG 1

FIG 2

FIG 3

FIG 4

FIG 5

FIG 6